# EUROPEAN PATENT SPECIFICATION

(11) **EP 3 998 650 B1**
(45) Date of publication and mention of the grant of the patent: **02.12.2026**
(21) Application number: 20837383.7
(22) Date of filing: 10.07.2020
(51) Int. Cl.: B32B 7/027, B32B 7/022, B32B 5/02, B32B 7/10, B32B 27/16

(54) **ADHESIVE FILM FOR METAL TERMINALS, METAL TERMINAL WITH ADHESIVE FILM FOR METAL TERMINALS ATTACHED THERETO, POWER STORAGE DEVICE COMPRISING ADHESIVE FILM FOR METAL TERMINALS, AND METHOD FOR PRODUCING POWER STORAGE DEVICE**
KLEBEFOLIE FÜR METALLANSCHLÜSSE, METALLANSCHLUSSKONTAKT MIT KLEBEFOLIE FÜR METALLANSCHLÜSSE, ELEKTRIZITÄTSSPEICHERVORRICHTUNG MIT VERWENDUNG DER BESAGTEN KLEBEFOLIE FÜR METALLANSCHLÜSSE UND VERFAHREN ZUR HERSTELLUNG EINER ELEKTRIZITÄTSSPEICHERVORRICHTUNG
FILM ADHÉSIF POUR BORNES MÉTALLIQUES, BORNE MÉTALLIQUE AVEC FILM ADHÉSIF POUR BORNES MÉTALLIQUES, DISPOSITIF DE STOCKAGE D'ÉLECTRICITÉ UTILISANT LEDIT FILM ADHÉSIF POUR BORNES MÉTALLIQUES ET PROCÉDÉ DE PRODUCTION DE DISPOSITIF DE STOCKAGE D'ÉLECTRICITÉ

(30) Priority: 10.07.2019 JP 2019128633
(43) Date of publication of application: 18.05.2022
(73) Proprietor: DAI NIPPON PRINTING CO., LTD., Tokyo 162-8001 (JP)
(72) Inventor: KATO, Takahiro, Tokyo 162-8001 (JP); TANAKA, Jun, Tokyo 162-8001 (JP)
(74) Representative: Müller-Boré & Partner Patentanwälte PartG mbB
(86) International application number: PCT/JP2020/027121
(87) International publication number: WO 2021/006351

(56) References cited:
- WO-A1-2015/008826
- WO-A1-2018/133030
- WO-A1-2018/133030
- WO-A1-2019/156113
- JP-A- 2005 306 946
- JP-A- 2007 184 189
- JP-A- 2012 022 821
- JP-A- 2014 132 538
- JP-A- 2015 170 428
- JP-A- 2016 091 939
- JP-A- 2017 033 820
- JP-A- 2017 033 820
- JP-A- 2017 069 151
- US-A1- 2008 213 659

## Description

### Technical Field

The present disclosure relates to an adhesive film for metal terminals, a metal terminal with the adhesive film for metal terminals attached thereto, a power storage device comprising the adhesive film for metal terminals, and a method for producing the power storage device.

### Background Art

Various types of power storage devices have been heretofore developed, and in every power storage device, a power storage device packaging material is an essential member for sealing a power storage device element including electrodes and an electrolyte. Metallic power storage device packaging materials have been heretofore widely used as power storage device packaging materials. In recent years, along with improvements in the performance of electric cars, hybrid electric cars, personal computers, cameras, mobile phones, power storage devices have been required to be diversified in shape, and to be thinner and lighter weight. However, the widely used metallic power storage device packaging materials are disadvantageous in that they have difficulty in keeping up with the diversification of shapes, and are limited in weight reduction.

Thus, a laminated sheet in which a base material layer/an adhesive layer/a barrier layer/a heat-sealable resin layer are laminated in this order has been recently proposed as a power storage device packaging material that can be readily processed into various shapes, and can achieve a thickness reduction and a weight reduction. When such a film-shaped power storage device packaging material is used, a power storage device element is sealed with the power storage device packaging material by heat-sealing a peripheral region of the power storage device packaging material in a state wherein the heat-sealable resin layers, positioned as the innermost layers of the power storage device packaging material, are opposed to each other.

Metal terminals protrude from the heat-sealed region of the power storage device packaging material, and the power storage device element sealed with the power storage device packaging material is electrically connected to the outside via the metal terminals electrically connected to the electrodes of the power storage device element. That is, in the heat-sealed region of the power storage device packaging material, the region where each of the metal terminals is present is heat-sealed with the metal terminal being held between the heat-sealable resin layers. Because the metal terminal and the heat-sealable resin layer are formed of different types of materials, the adhesion is likely to decrease at the interface between the metal terminal and the heat-sealable resin layer.

Thus, an adhesive film may be disposed between the metal terminal and the heat-sealable resin layer, for the purpose of improving the adhesion between these layers, for example.

### Citation List

### Patent Literature

Patent Literature 1: JP 2015-79638A ; JP2017069151 relates to an adhesive film for battery metal terminals.

### Summary of Invention

### Technical Problem

Such an adhesive film is required to have high adhesion between the power storage device packaging material and the metal terminal.

In the step of bonding the metal terminal to the power storage device packaging material with the adhesive film interposed therebetween, it may be required to perform the bonding by heating at a low temperature of, for example, 140 to 180°C. The conventional heating temperature in the bonding step is typically about 190°C, and when the heating temperature during bonding is lower than the conventional temperature, the adhesion strength of the adhesive film to the metal terminal tends to decrease. Depending on the degree of decrease in the adhesion strength, the adhesion strength between the power storage device packaging material and the metal terminal with the adhesive film interposed therebetween may become insufficient.

Under such circumstances, it is a main object of the present disclosure to provide an adhesive film for metal terminals that exhibits high adhesion strength to a metal terminal even when the heating temperature during bonding of the adhesive film for metal terminals to the metal terminal is a low temperature of 140 to 180°C, for example. It is also an object of the present disclosure to provide a metal terminal with the adhesive film for metal terminals attached thereto, a power storage device comprising the adhesive film for metal terminals, and a method for producing the power storage device.

### Solution to Problem

The inventors of the present disclosure have conducted extensive research to solve the aforementioned problem. As a result, they have found that an adhesive film for metal terminals in which the value of the tensile elastic modulus after heating at a temperature of 140°C is smaller than the value of the tensile elastic modulus B before heating exhibits high adhesion strength to a metal terminal even when the heating temperature during bonding of the adhesive film for metal terminals to the metal terminal is a low temperature of 140 to 180°C, for example. The invention of the present disclosure has been completed as a result of further research based on this finding.

In summary, the present disclosure provides an embodiment of the invention as set forth below:
An adhesive film for metal terminals, which is to be interposed between a metal terminal electrically connected to an electrode of a power storage device element and a power storage device packaging material for sealing the power storage device element,
wherein a value of the following tensile elastic modulus A after heating is smaller than a value of the following tensile elastic modulus B before heating:
   tensile elastic modulus A after heating: a tensile elastic modulus as measured in an environment at a temperature of 25°C, after the adhesive film for metal terminals is allowed to stand in a heating environment at a temperature of 140°C for 12 seconds, and then in an environment at a temperature of 25°C for 1 hour;
   tensile elastic modulus B before heating: a tensile elastic modulus as measured in an environment at a temperature of 25°C.

### Advantageous Effects of Invention

The present disclosure can provide an adhesive film for metal terminals that exhibits high adhesion strength to a metal terminal even when the heating temperature during bonding of the adhesive film for metal terminals to the metal terminal is a low temperature of 140 to 180°C, for example. The present disclosure can also provide a metal terminal with the adhesive film for metal terminals attached thereto, a power storage device comprising the adhesive film for metal terminals, and a method for producing the power storage device.

### Brief Description of Drawings

FIG. 1 is a schematic plan view of a power storage device according to the present disclosure.
FIG. 2 is a schematic cross-sectional view taken along line A-A' in FIG. 1.
FIG. 3 is a schematic cross-sectional view taken along line B-B' in FIG. 1.
FIG. 4 is a schematic cross-sectional view of an adhesive film for metal terminals according to the present disclosure.
FIG. 5 is a schematic cross-sectional view of an adhesive film for metal terminals according to the present disclosure.
FIG. 6 is a schematic cross-sectional view of an adhesive film for metal terminals according to the present disclosure.
FIG. 7 is a schematic cross-sectional view of an adhesive film for metal terminals according to the present disclosure.
FIG. 8 is a schematic cross-sectional view of a power storage device packaging material according to the present disclosure.

### Description of Embodiments

An adhesive film for metal terminals of the present disclosure is to be interposed between a metal terminal electrically connected to an electrode of a power storage device element and a power storage device packaging material for sealing the power storage device element. In the adhesive film for metal terminals of the present disclosure, a value of the following tensile elastic modulus A after heating is smaller than a value of the following tensile elastic modulus B before heating:
tensile elastic modulus A after heating: a tensile elastic modulus as measured in an environment at a temperature of 25°C, after the adhesive film for metal terminals is allowed to stand in a heating environment at a temperature of 140°C for 12 seconds, and then in an environment at a temperature of 25°C for 1 hour;
tensile elastic modulus B before heating: a tensile elastic modulus as measured in an environment at a temperature of 25°C.

The adhesive film for metal terminals of the present disclosure can exhibit high adhesion strength to a metal terminal even when the heating temperature during bonding of the adhesive film for metal terminals to the metal terminal is a low temperature of 140 to 180°C, for example.

A power storage device of the present disclosure comprises a power storage device element comprising at least a positive electrode, a negative electrode, and an electrolyte, a power storage device packaging material for sealing the power storage device element, and a metal terminal electrically connected to each of the positive electrode and the negative electrode and protruding outside the power storage device packaging material, wherein the adhesive film for metal terminals of the present disclosure is interposed between the metal terminal and the power storage device packaging material. Hereinafter, the adhesive film for metal terminals of the present disclosure, the power storage device comprising the adhesive film for metal terminals, and a method for producing the power storage device will be described in detail.

In the present specification, any numerical range indicated by "... to ..." is intended to mean "... or more" and "... or less". For example, the recitation "2 to 15 mm" is intended to mean 2 mm or more and 15 mm or less.

### 1. Adhesive Film for Metal Terminals

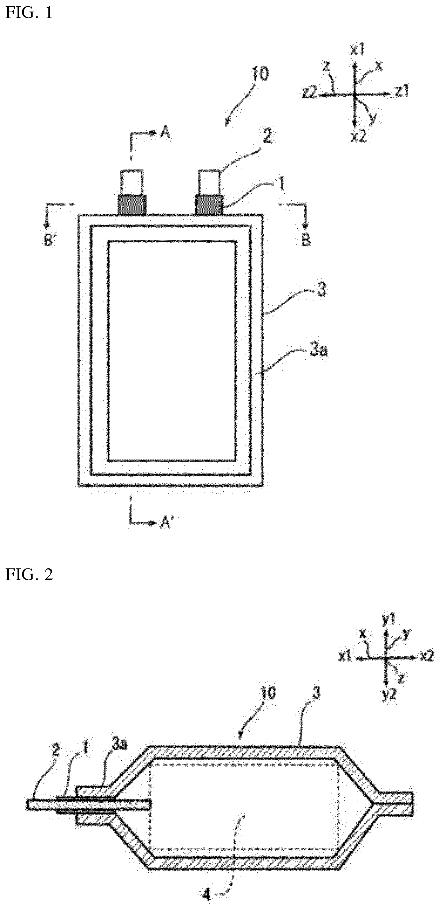

The adhesive film for metal terminals of the present disclosure is interposed between a metal terminal electrically connected to an electrode of a power storage device element and a power storage device packaging material for sealing the power storage device element. Specifically, as shown in FIGS. 1 to 3, for example, an adhesive film 1 for metal terminals according to the present disclosure is interposed between a metal terminal 2, which is electrically connected to an electrode of a power storage device element 4, and a power storage device packaging material 3 for sealing the power storage device element 4. The metal terminal 2 protrudes outside the power storage device packaging material 3, and is held between the power storage device packaging materials 3 with the adhesive film 1 for metal terminals interposed therebetween, in a peripheral region 3a of the power storage device packaging materials 3 that have been heat-sealed. In the present disclosure, during heat-sealing of the power storage device packaging materials, the heating temperature is typically about 160 to 190°C, and the pressure is typically about 1.0 to 2.0 MPa.

The adhesive film 1 for metal terminals of the present disclosure is provided to increase the adhesion between the metal terminal 2 and the power storage device packaging material 3. The hermeticity of the power storage device element 4 is improved by increasing the adhesion between the metal terminal 2 and the power storage device packaging material 3. As described above, during heat-sealing of the power storage device element 4, the power storage device element is sealed in such a manner that the metal terminal 2 electrically connected to an electrode of the power storage device element 4 protrudes outside the power storage device packaging material 3. At this time, because the metal terminal 2 formed of metal and a heat-sealable resin layer 35 (layer formed of a heat-sealable resin, such as a polyolefin) positioned as the innermost layer of the power storage device packaging material 3 are formed of different types of materials, the hermeticity of the power storage device element is likely to decrease at the interface between the metal terminal 2 and the heat-sealable resin layer 35, if the adhesive film is not used.

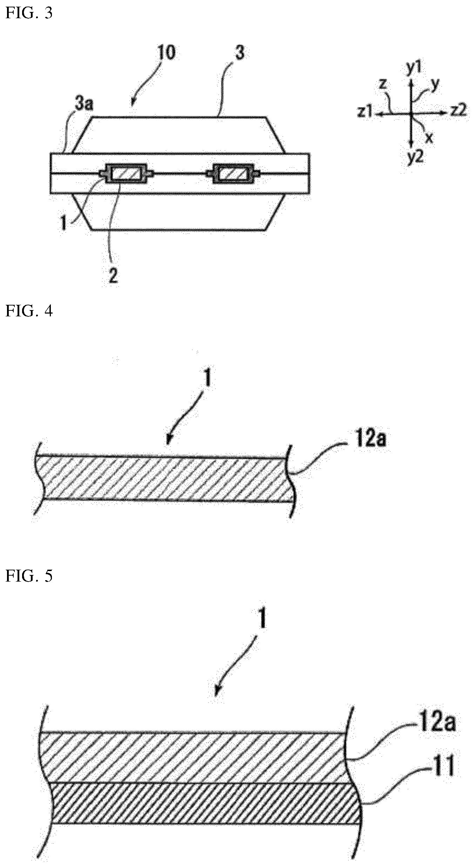

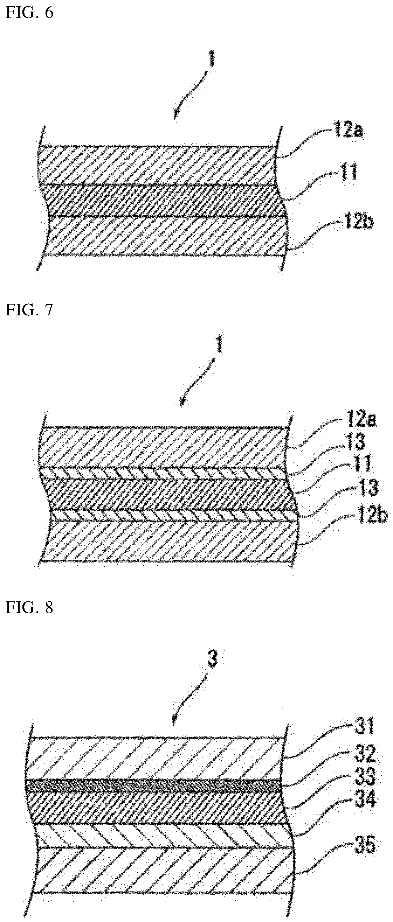

The adhesive film 1 for metal terminals of the present disclosure may be formed of a single layer as shown in FIG. 4, or may be formed of multiple layers as shown in FIGS. 5 to 8, as long as the value of the tensile elastic modulus A after heating is smaller than the value of the tensile elastic modulus B before heating, as described below. The adhesive film 1 for metal terminals of the present disclosure is preferably formed of multiple layers. When the adhesive film 1 for metal terminals of the present disclosure is formed of multiple layers, it preferably includes a structure in which at least a base material 11 and a first polyolefin layer 12a are laminated, as shown in FIGS. 5 to 8, and more preferably includes a structure in which at least the first polyolefin layer 12a, the base material 11, and a second polyolefin layer 12b are laminated in this order, as shown in FIGS. 6 and 7. In the adhesive film 1 for metal terminals of the present disclosure, it is preferred that the first polyolefin layer 12a and the second polyolefin layer 12b be positioned on both surfaces.

In the adhesive film 1 for metal terminals of the present disclosure, it is preferred that at least one of the first polyolefin layer 12a and the second polyolefin layer 12b contain an acid-modified polyolefin, and it is more preferred that the first polyolefin layer 12a and the second polyolefin layer 12b contain an acid-modified polyolefin. The base material 11 preferably contains a polyolefin. As described below, each of the first polyolefin layer 12a and the second polyolefin layer 12b is preferably an acid-modified polypropylene layer formed of acid-modified polypropylene. The base material 11 is preferably a polypropylene layer formed of polypropylene.

Specific examples of preferred laminated structures of the adhesive film 1 for metal terminals of the present disclosure include a two-layer structure of an acid-modified polypropylene layer/a polypropylene layer; a three-layer structure in which an acid-modified polypropylene layer/a polypropylene layer/an acid-modified polypropylene layer are laminated in this order; and a five-layer structure in which an acid-modified polypropylene layer/a polypropylene layer/an acid-modified polypropylene layer/a polypropylene layer/an acid-modified polypropylene layer are laminated in this order. More preferred among these are a two-layer structure of an acid-modified polypropylene layer/a polypropylene layer; and a three-layer structure in which an acid-modified polypropylene layer/a polypropylene layer/an acid-modified polypropylene layer are laminated in this order; and particularly preferred is a three-layer structure in which an acid-modified polypropylene layer/a polypropylene layer/an acid-modified polypropylene layer are laminated in this order.

When the adhesive film 1 for metal terminals of the present disclosure is disposed between the power storage device packaging material 3 and the metal terminal 2 of the power storage device 10, the surface of the metal terminal 2 formed of metal and the heat-sealable resin layer 35 (layer formed of a heat-sealable resin, such as a polyolefin) of the power storage device packaging material 3 are bonded to each other, with the adhesive film 1 for metal terminals interposed therebetween.

In the adhesive film 1 for metal terminals of the present disclosure, the value of the following tensile elastic modulus A after heating is smaller than the value of the following tensile elastic modulus B before heating:
tensile elastic modulus A after heating: a tensile elastic modulus as measured in an environment at a temperature of 25°C, after the adhesive film for metal terminals is allowed to stand in a heating environment at a temperature of 140°C for 12 seconds, and then in an environment at a temperature of 25°C for 1 hour;
tensile elastic modulus B before heating: a tensile elastic modulus as measured in an environment at a temperature of 25°C.

From the viewpoint of achieving higher adhesion strength to the metal terminal even when the heating temperature during bonding of the adhesive film for metal terminals to the metal terminal is a low temperature of 140 to 180°C, for example, the tensile elastic modulus A is preferably about 580 MPa or more, more preferably about 600 MPa or more, and still more preferably about 650 MPa or more, while it is preferably about 700 MPa or less. Preferred ranges include from about 580 to 700 MPa, from about 600 to 700 MPa, and from about 650 to 700 MPa. The method of measuring the tensile elastic modulus A is as follows.

### <Tensile Elastic Modulus A after Heating>

The tensile elastic modulus after heating under a temperature condition of 140°C for 12 seconds is measured according to the following procedure. Initially, the adhesive film for metal terminals is cut into a rectangular shape with a width (TD) of 15 mm and a length (MD) of 50 mm. Next, the adhesive film for metal terminals is placed on a hot plate heated to 140°C and allowed to stand for 12 seconds, and then immediately placed in an environment at 25°C under atmospheric pressure and allowed to stand for 1 hour to obtain a test sample. Next, using a Tensilon universal material testing machine (for example, RTG-1210 manufactured by A&D Co., Ltd.) in an environment at 25°C under atmospheric pressure, a stress-strain curve for the test sample is acquired at a tensile speed of 300 mm/min and a chuck distance of 30 mm. The tensile elastic modulus A of the adhesive film for metal terminals after heating is obtained from the slope of the line connecting the two points of strains of 0.05% and 0.25%.

From the viewpoint of achieving higher adhesion strength to the metal terminal even when the heating temperature during bonding of the adhesive film for metal terminals to the metal terminal is a low temperature of 140 to 180°C, for example, the tensile elastic modulus after heating under a temperature condition of 160°C for 12 seconds is preferably about 600 MPa or more, more preferably about 650 MPa or more, and still more preferably about 680 MPa or more, while it is preferably about 780 MPa or less. Preferred ranges include from about 600 to 780 MPa, from about 650 to 780 MPa, and from about 680 to 700 MPa. The method of measuring the tensile elastic modulus after heating under a temperature condition of 160°C for 12 seconds is the same as in <Tensile Elastic Modulus A after Heating> above, except that the adhesive film for metal terminals is placed on a hot plate heated to 160°C.

From the viewpoint of achieving higher adhesion strength to the metal terminal even when the heating temperature during bonding of the adhesive film for metal terminals to the metal terminal is a low temperature of 140 to 180°C, for example, the tensile elastic modulus after heating under a temperature condition of 180°C for 12 seconds is preferably about 500 MPa or more, more preferably about 520 MPa or more, and still more preferably about 550 MPa or more, while it is preferably about 750 MPa or less. Preferred ranges include from about 500 to 750 MPa, from about 520 to 750 MPa, and from about 550 to 750 MPa. The method of measuring the tensile elastic modulus after heating under a temperature condition of 180°C for 12 seconds is the same as in <Tensile Elastic Modulus A after Heating> above, except that the adhesive film for metal terminals is placed on a hot plate heated to 180°C.

In the adhesive film 1 for metal terminals of the present disclosure, the tensile elastic modulus B as measured in an environment at a temperature of 25°C, before exposure to the heating environment, is preferably about 580 MPa or more, more preferably about 650 MPa or more, still more preferably about 700 MPa or more, and even more preferably about 750 MPa or more, while it is preferably about 900 MPa or less, and more preferably about 800 MPa or less. Preferred ranges include from about 580 to 900 MPa, from about 650 to 900 MPa, from about 700 to 900 MPa, from about 750 to 900 MPa, from about 580 to 800 MPa, from about 650 to 800 MPa, from about 700 to 800 MPa, and from about 750 to 800 MPa. The method of measuring the tensile elastic modulus B is as follows.

### <Tensile Elastic Modulus B before Heating>

In accordance with JIS K7161-1 (ISO527-1), the tensile elastic modulus B of the adhesive film for metal terminals (the adhesive film for metal terminals before the heating in <Tensile Elastic Modulus A after Heating> above) in an environment at 25°C is measured. Specifically, the adhesive film for metal terminals is cut into a rectangular shape with a width (TD) of 15 mm and a length (MD) of 50 mm. Next, for the adhesive film for metal terminals, a stress-strain curve for the test sample is acquired using a Tensilon universal material testing machine (for example, RTG-1210 manufactured by A&D Co., Ltd.) in an environment at 25°C, at a tensile speed of 300 mm/min and a chuck distance of 30 mm. The tensile elastic modulus B of the adhesive film for metal terminals before heating is obtained from the slope of the line connecting the two points of strains of 0.05% and 0.25%.

The tensile elastic modulus of the adhesive film 1 for metal terminals of the present disclosure can be adjusted by adjusting the laminated structure, the melting points, MFRs, thicknesses, and thickness ratio of the layers, as well as conditions in the production of the adhesive film 1 for metal terminals, such as a T-die and inflation (for example, the extrusion width from the T-die, the stretching ratio, the stretching speed, and the heat treatment temperature).

From the viewpoint of achieving higher adhesion strength to the metal terminal even when the heating temperature during bonding of the adhesive film for metal terminals to the metal terminal is a low temperature of 140 to 180°C, for example, in the adhesive film 1 for metal terminals of the present disclosure, a difference in tensile elastic modulus calculated by subtracting the value of the tensile elastic modulus B from the value of the tensile elastic modulus A, i.e., ((difference in tensile elastic modulus) = "the value of the tensile elastic modulus A after heating" - "the value of the tensile elastic modulus B before heating"), is preferably about -20 MPa or less (i.e., (difference in tensile elastic modulus) ≤ -20 MPa), more preferably about -50 MPa or less, and still more preferably about -70 MPa or less. The difference in tensile elastic modulus is preferably about -150 MPa or more. Preferred ranges of the difference in tensile elastic modulus include from about -20 to -150 MPa, from about -50 to -150 MPa, and from about -70 to -150 MPa.

From the viewpoint of achieving higher adhesion strength to the metal terminal even when the heating temperature during bonding of the adhesive film for metal terminals to the metal terminal is a low temperature of 140 to 180°C, for example, while satisfying the above-described tensile elastic modulus, the entire thickness of the adhesive film 1 for metal terminals of the present disclosure is, for example, about 120 µm or more, preferably about 140 µm or more, and more preferably about 150 µm or more. The upper limit of the entire thickness of the adhesive film 1 for metal terminals of the present disclosure is, for example, about 200 µm. Preferred ranges of the entire thickness of the adhesive film 1 for metal terminals of the present disclosure include from about 120 to 200 µm, from about 140 to 200 µm, and from about 150 to 200 µm.

### <When the Adhesive Film for Metal Terminals of the Present Disclosure is Formed of a Single Layer>

When the adhesive film for metal terminals of the present disclosure is formed of a single layer, the adhesive film 1 for metal terminals of the present disclosure is preferably formed of the first polyolefin layer 12a with the above-described physical properties.

### <When the Adhesive Film for Metal Terminals of the Present Disclosure is Formed of Multiple Layers>

When the adhesive film for metal terminals of the present disclosure is formed of multiple layers, the adhesive film 1 for metal terminals of the present disclosure is preferably a laminate with the above-described physical properties, which includes a structure in which at least the base material 11 and the first polyolefin layer 12a are laminated, and more preferably a laminate with the above-described properties, which includes a structure in which at least the first polyolefin layer 12a, the base material 11, and a second polyolefin layer 12b are laminated in this order.

Hereinafter, the base material 11, the first polyolefin layer 12a, and the second polyolefin layer 12b will be described in detail.

### [Base Material 11]

In the adhesive film 1 for metal terminals, the base material 11 is an optional layer, which functions as a support of the adhesive film 1 for metal terminals.

The material that forms the base material 11 is not limited. Examples of the material that forms the base material 11 include polyolefins, polyamides, polyesters, epoxy resins, acrylic resins, fluororesins, silicone resins, phenol resins, polyetherimides, polyimides, polycarbonates, and mixtures or copolymers thereof, with polyolefins being particularly preferred among these. That is, the material that forms the base material 11 is preferably a resin containing a polyolefin backbone, such as a polyolefin or an acid-modified polyolefin. The inclusion of a polyolefin backbone in the resin that forms the base material 11 can be analyzed by, for example, infrared spectroscopy or gas chromatography-mass spectrometry.

Specific examples of polyolefins include polyethylene, such as low-density polyethylene, medium-density polyethylene, high-density polyethylene, and linear low-density polyethylene; crystalline or amorphous polypropylene, such as homopolypropylene, block copolymers of polypropylene (for example, block copolymers of propylene and ethylene), and random copolymers of polypropylene (for example, random copolymers of propylene and ethylene); and terpolymers of ethylene-butene-propylene. Preferred among these polyolefins are polyethylene and polypropylene, and more preferred is polypropylene.

Specific examples of polyamides include aliphatic polyamides, such as nylon 6, nylon 66, nylon 610, nylon 12, nylon 46, and copolymers of nylon 6 and nylon 66; polyamides containing aromatics, such as hexamethylenediamine-isophthalic acid-terephthalic acid copolyamides containing structural units derived from terephthalic acid and/or isophthalic acid, for example, nylon 6I, nylon 6T, nylon 6IT, and nylon 6I6T (I denotes isophthalic acid, and T denotes terephthalic acid), and polymethaxylylene adipamide (MXD6); cycloaliphatic polyamides, such as polyaminomethyl cyclohexyl adipamide (PACM6); polyamides copolymerized with a lactam component or an isocyanate component such as 4,4'-diphenylmethane-diisocyanate, and polyester amide copolymers or polyether ester amide copolymers that are copolymers of copolyamides with polyesters or polyalkylene ether glycols; and copolymers thereof. These polyamides may be used alone or in combination.

Specific examples of polyesters include polyethylene terephthalate, polybutylene terephthalate, polyethylene naphthalate, polybutylene naphthalate, polyethylene isophthalate, copolyesters containing ethylene terephthalate as a main repeating unit, and copolyesters containing butylene terephthalate as a main repeating unit. Specific examples of copolyesters containing ethylene terephthalate as a main repeating unit include copolyesters obtained by polymerizing ethylene isophthalate with ethylene terephthalate as a main repeating unit (abbreviated as polyethylene (terephthalate/isophthalate); hereinafter abbreviations are made in the same manner), polyethylene (terephthalate/isophthalate), polyethylene (terephthalate/adipate), polyethylene (terephthalate/sodium sulfoisophthalate), polyethylene (terephthalate/sodium isophthalate), polyethylene (terephthalate/phenyl-dicarboxylate), and polyethylene (terephthalate/decane dicarboxylate). Specific examples of copolyesters containing butylene terephthalate as a main repeating unit include copolyesters obtained by polymerizing butylene isophthalate with butylene terephthalate as a main repeating unit (abbreviated as polybutylene (terephthalate/isophthalate); hereinafter abbreviations are made in the same manner), polybutylene (terephthalate/adipate), polybutylene (terephthalate/sebacate), polybutylene (terephthalate/decane dicarboxylate), and polybutylene naphthalate. These polyesters may be used alone or in combination.

Alternatively, the base material 11 may be formed of a nonwoven fabric formed of the above-described resin. When the base material 11 is a nonwoven fabric, the base material 11 is preferably formed of a polyolefin, a polyamide, as described above.

As described above, the base material 11 may be blended with a colorant to form a layer containing the colorant. Alternatively, a resin with low transparency may be selected to adjust the light transmittance. When the base material 11 is a film, the film may be a colored film or a film with low transparency. When the base material 11 is a nonwoven fabric, the nonwoven fabric may be a nonwoven fabric formed using a binder or fibers containing a colorant, or may be a nonwoven fabric with low transparency.

From the viewpoint of achieving higher adhesion strength to the metal terminal even when the heating temperature during bonding of the adhesive film for metal terminals to the metal terminal is a low temperature of 140 to 180°C, for example, while satisfying the above-described tensile elastic modulus, the melt mass-flow rate (MFR) at 230°C of the base material 11 is preferably 8 g/10 min or less, and more preferably 4 g/10 min or less. From the viewpoint of imparting excellent flexibility (good evaluation in the below-described bending test) to the adhesive film 1 for metal terminals, the melt mass-flow rate (MFR) at 230°C of the base material 11 is preferably 1 g/10 min or more, and more preferably 2 g/10 min or more, and preferred ranges include from about 1 to 8 g/10 min, from about 1 to 4 g/10 min, from about 2 to 8 g/10 min, and from about 2 to 4 g/10 min. As used herein, the melt mass-flow rate (MFR) of the base material 11 refers to the value (g/10 min) at 230°C as measured in accordance with JIS K7210-1: 2014 (ISO 1133-1: 2011).

From the viewpoint of achieving higher adhesion strength to the metal terminal even when the heating temperature during bonding of the adhesive film for metal terminals to the metal terminal is a low temperature of 140 to 180°C, for example, while satisfying the above-described tensile elastic modulus, the melting point of the base material 11 is preferably 130°C or more, and more preferably 150°C or more. From the viewpoint of imparting excellent flexibility to the adhesive film 1 for metal terminals, the melting point of the base material 11 is preferably 190°C or less, and more preferably 170°C or less. Preferred ranges include from about 130 to 190°C and from about 150 to 170°C. The melting point of the base material 11 is measured using the method described in the Examples.

When the base material 11 is formed of a resin film, the surface of the base material 11 may be optionally subjected to a known easy-adhesion means, such as corona discharge treatment, ozone treatment, or plasma treatment.

From the viewpoint of achieving higher adhesion strength to the metal terminal even when the heating temperature during bonding of the adhesive film for metal terminals to the metal terminal is a low temperature of 140 to 180°C, for example, the thickness of the base material 11 is preferably about 40 µm or more, more preferably about 50 µm or more, still more preferably about 55 µm or more, and even more preferably about 60 µm or more, while it is preferably about 120 µm or less, more preferably about 100 µm or less, and still more preferably about 85 µm or less. Preferred ranges include from about 40 to 120 µm, from about 40 to 100 µm, from about 40 to 85 µm, from about 50 to 120 µm, from about 50 to 100 µm, from about 50 to 85 µm, from about 55 to 120 µm, from about 55 to 100 µm, from about 55 to 85 µm, from about 60 to 120 µm, from about 60 to 100 µm, and from about 60 to 85 µm. Particularly preferred among these is the range of about 60 to 100 µm.

### [First and Second Polyolefin Layers 12a and 12b]

The adhesive film 1 for metal terminals of the present disclosure preferably includes the first polyolefin layer 12a. When the adhesive film 1 for metal terminals of the present disclosure is formed of a single layer, it is preferably composed of the first polyolefin layer 12a as shown in FIG. 4. When the adhesive film 1 for metal terminals of the present disclosure is formed of multiple layers, it preferably includes a structure in which at least the base material 11 and the first polyolefin layer 12a are laminated, and more preferably includes a structure in which at least the first polyolefin layer 12a, the base material 11, and the second polyolefin layer 12b are laminated in this order, as shown in FIGS. 6 and 7. In the adhesive film 1 for metal terminals of the present disclosure, it is preferred that the first polyolefin layer 12a and the second polyolefin layer 12b be positioned on both surfaces.

It is preferred that at least one of the first polyolefin layer 12a and the second polyolefin layer 12b contain an acid-modified polyolefin, and it is more preferred that the first polyolefin layer 12a and the second polyolefin layer 12b contain an acid-modified polyolefin. When at least one of the first and second polyolefin layers 12a and 12b is formed of an acid-modified polyolefin, the present disclosure includes the case where one of the first and second polyolefin layers 12a and 12b is formed of an acid-modified polyolefin, and the other is formed of a polyolefin; and the case where both the first and second polyolefin layers 12a and 12b are formed of an acid-modified polyolefin. The acid-modified polyolefin has high affinity for metals and heat-sealable resins, such as a polyolefin. The polyolefin has high affinity for heat-sealable resins, such as a polyolefin. In the adhesive film 1 for metal terminals of the present disclosure, therefore, the layer formed of the acid-modified polyolefin is disposed on the metal terminal 2 side, such that high adhesion can be achieved at the interface between the adhesive film 1 for metal terminals, and the metal terminal 2 and the heat-sealable resin layer 35.

The adhesive film 1 for metal terminals is preferably a laminate including the first polyolefin layer 12a, the base material 11, and the second polyolefin layer 12b in this order. The adhesive film 1 for metal terminals has, for example, a laminated structure in which the first polyolefin layer 12a/the base material 11/the second polyolefin layer 12b are laminated in this order, as shown in FIGS. 6 and 7. As described above, the adhesive film 1 for metal terminals particularly preferably has a three-layer structure in which an acid-modified polypropylene layer/a polypropylene layer/an acid-modified polypropylene layer are laminated in this order.

While the acid-modified polyolefin to be used as the first and second polyolefin layers 12a and 12b is not limited as long as it is a polyolefin modified with an acid, it is preferably a polyolefin grafted with an unsaturated carboxylic acid or an anhydride thereof.

Specific examples of the polyolefin to be modified with an acid include polyethylene, such as low-density polyethylene, medium-density polyethylene, high-density polyethylene, and linear low-density polyethylene; crystalline or amorphous polypropylene, such as homopolypropylene, block copolymers of polypropylene (for example, block copolymers of propylene and ethylene), and random copolymers of polypropylene (for example, random copolymers of propylene and ethylene); and terpolymers of ethylene-butene-propylene. Preferred among these polyolefins are polyethylene and polypropylene.

The polyolefin to be modified with an acid may also be a cyclic polyolefin. For example, a carboxylic acid-modified cyclic polyolefin is a polymer obtained by replacing a portion of the monomers that form the cyclic polyolefin with an α,β-unsaturated carboxylic acid or an anhydride thereof, and copolymerizing them, or by block-polymerizing or graft-polymerizing an α,β-unsaturated carboxylic acid or an anhydride thereof onto the cyclic polyolefin.

The cyclic polyolefin to be modified with an acid is a copolymer of an olefin and a cyclic monomer. Examples of the olefin as a constituent monomer of the cyclic polyolefin include ethylene, propylene, 4-methyl-1-pentene, butadiene, and isoprene. Examples of the cyclic monomer as a constituent monomer of the cyclic polyolefin include cyclic alkenes, such as norbornene; specifically, cyclic dienes, such as cyclopentadiene, dicyclopentadiene, cyclohexadiene, and norbornadiene. Preferred among these polyolefins are cyclic alkenes, and more preferred is norbornene. Examples of constituent monomers also include styrene.

Examples of the carboxylic acid or anhydride thereof to be used for the acid modification include maleic acid, acrylic acid, itaconic acid, crotonic acid, maleic anhydride, and itaconic anhydride.

When at least one of the first and second polyolefin layers 12a and 12b is formed of a polyolefin, examples of the polyolefin include the same polyolefins as those mentioned above as the polyolefin to be modified with an acid and the cyclic polyolefin to be modified with an acid.

Each of the first and second polyolefin layers 12a and 12b may be formed with one resin component alone, or may be formed with a blend polymer made of a combination of two or more resin components. Furthermore, each of the first and second polyolefin layers 12a and 12b may be formed of only one layer, or may be formed of two or more layers with the same resin component or different resin components.

Each of the first and second polyolefin layers 12a and 12b may further optionally contain a filler. When the first and second polyolefin layers 12a and 12b contain a filler, the filler functions as a spacer, which can effectively inhibit a short circuit between the metal terminal 2 and a barrier layer 33 of the power storage device packaging material 3. The filler has a particle diameter of about 0.1 to 35 µm, preferably about 5.0 to 30 µm, more preferably about 10 to 25 µm. The amount of the filler contained per 100 parts by mass of the resin component that forms each of the first and second polyolefin layers 12a and 12b is about 5 to 30 parts by mass, and preferably about 10 to 20 parts by mass.

The filler may be either inorganic or organic. Examples of inorganic fillers include carbon (carbon and graphite), silica, aluminum oxide, barium titanate, iron oxide, silicon carbide, zirconium oxide, zirconium silicate, magnesium oxide, titanium oxide, calcium aluminate, calcium hydroxide, aluminum hydroxide, magnesium hydroxide, and calcium carbonate. Examples of organic fillers include fluororesins, phenol resins, urea resins, epoxy resins, acrylic resins, benzoguanamine-formaldehyde condensate, melamine-formaldehyde condensate, crosslinked polymethyl methacrylate, and crosslinked polyethylene. From the viewpoint of shape stability, rigidity, and contents resistance, aluminum oxide, silica, fluororesins, acrylic resins, and benzoguanamine-formaldehyde condensate are preferred; in particular, spherical aluminum oxide and silica are more preferred. As a method of mixing the filler into the resin component that forms the polyolefin layers 12, the following methods may be adopted, for example: a method in which both components are melt-blended beforehand in a Banbury mixer to form a masterbatch, which is then adjusted to a predetermined mixture ratio; and a method in which the filler is directly mixed into the resin component.

Each of the first and second polyolefin layers 12a and 12b may also optionally contain a pigment. Various inorganic pigments may be used as the pigment. Specific examples of preferred pigments include carbon (carbon and graphite) mentioned above as the filler. Carbon (carbon and graphite), which is a material generally used inside a power storage device, does not have the possibility of dissolving into an electrolytic solution. Moreover, carbon (carbon and graphite) has a high coloring effect and thus can achieve a sufficient coloring effect when added only in an amount that does not impair adhesiveness, and also does not melt by heat and thus can increase the apparent melt viscosity of the added resin. Furthermore, carbon (carbon and graphite) can prevent, during thermal bonding (heat sealing), thinning of the region to which pressure is applied, thereby imparting high hermeticity between the power storage device packaging material and the metal terminal.

When a pigment is to be added to the first and second polyolefin layers 12a and 12b, in the case of using, for example, carbon black having a particle diameter of about 0.03 µm, the amount of the pigment to be added is about 0.05 to 0.3 part by mass, and preferably about 0.1 to 0.2 part by mass, per 100 parts by mass of the resin component that forms each of the first and second polyolefin layers 12a and 12b. By adding a pigment to the first and second polyolefin layers 12a and 12b, the presence or absence of the adhesive film 1 for metal terminals can be detected with a sensor, or can be visually inspected. When a filler and a pigment are to be added to the first and second polyolefin layers 12a and 12b, the filler and the pigment may be added to the identical first and second polyolefin layers 12a and 12b; however, from the viewpoint of avoiding impairment of the heat sealability of the adhesive film 1 for metal terminals, it is preferred to add the filler and the pigment to each of the first and second polyolefin layers 12a and 12b separately.

Each of the first and second polyolefin layers 12a and 12b may be formed of a polyolefin film or an acid-modified polyolefin film. When each of the first and second polyolefin layers 12a and 12b is formed of a polyolefin film or an acid-modified polyolefin film, the adhesive film for metal terminals can be suitably produced by laminating a resin film formed of the above-described polyolefin or acid-modified polyolefin onto the base material 11, using a dry lamination method, for example. Alternatively, the adhesive film for metal terminals can be suitably produced by extruding the resin that forms each of the first and second polyolefin layers 12a and 12b onto the base material 11.

From the viewpoint of achieving higher adhesion strength to the metal terminal even when the heating temperature during bonding of the adhesive film for metal terminals to the metal terminal is a low temperature of 140 to 180°C, for example, while satisfying the above-described tensile elastic modulus, the melt mass-flow rate (MFR) at 230°C of the first and second polyolefin layers 12a and 12b is preferably about 6.5 g/10 min or more, more preferably about 7 g/10 min or more, and still more preferably about 8 g/10 min or more, while it is preferably about 11 g/10 min or less, more preferably about 10 g/10 min or less, and still more preferably about 8.5 g/10 min or less. Preferred ranges include from about 6.5 to 11 g/10 min, from about 6.5 to 10 g/10 min, from about 6.5 to 8.5 g/10 min, from about 7 to 11 g/10 min, from about 7 to 10 g/10 min, from about 7 to 8.5 g, from about 8 to 11 g/10 min, from about 8 to 10 g/10 min, and from about 8 to 8.5 g/10 min. As used herein, the melt mass-flow rate (MFR) of the each of the first and second polyolefin layers 12a and 12b refers to the value (g/10 min) at 230°C as measured in accordance with JIS K7210-1: 2014 (ISO 1133-1: 2011).

From the viewpoint of achieving higher adhesion strength to the metal terminal even when the heating temperature during bonding of the adhesive film for metal terminals to the metal terminal is a low temperature of 140 to 180°C, for example, while satisfying the above-described tensile elastic modulus, the melting point of the first and second polyolefin layers 12a and 12b is preferably about 120°C or more, and more preferably about 130°C or more, while it is preferably about 160°C or less, and more preferably about 150°C or less. Preferred ranges include from about 120 to 160°C, from about 120 to 150°C, from about 130 to 160°C, and from about 130 to 150°C. The melting point of the first and second polyolefin layers 12a and 12b is measured using the method described in the Examples.

When the first and second polyolefin layers 12a and 12b each formed of a resin film are laminated to the surfaces of the base material 11, the base material 11-side surface of each of the first and second polyolefin layers 12a and 12b may be optionally subjected to a known easy-adhesion means, such as corona discharge treatment, ozone treatment, or plasma treatment. In particular, corona discharge treatment can increase the adhesion between the base material 11, and the first polyolefin layer 12a and the second polyolefin layer 12b, thereby imparting high hermeticity between the power storage device packaging material and the metal terminal.

From the viewpoint of achieving higher adhesion strength to the metal terminal even when the heating temperature during bonding of the adhesive film for metal terminals to the metal terminal is a low temperature of 140 to 180°C, for example, the thickness of the first and second polyolefin layers 12a and 12b is preferably about 20 µm or more, more preferably about 30 µm or more, and still more preferably about 35 µm or more, while it is preferably about 60 µm or less, and more preferably about 50 µm or less. Preferred ranges of the thickness of the first and second polyolefin layers 12a and 12b include from about 20 to 60 µm, from about 20 to 50 µm, from about 30 to 60 µm, from about 30 to 50 µm, from about 35 to 60 µm, and from about 35 to 50 µm.

From the viewpoint of achieving higher adhesion strength to the metal terminal even when the heating temperature during bonding of the adhesive film for metal terminals to the metal terminal is a low temperature of 140 to 180°C, for example, while satisfying the above-described tensile elastic modulus, the ratio of the thickness of the base material 11 to the total thickness of the first and second polyolefin layers 12a and 12b is preferably 0.5 or more, more preferably 0.7 or more, and still more preferably 0.8 or more, while it is preferably 1.5 or less, and more preferably 1.2 or less. Preferred ranges include from about 0.5 to 1.5, from about 0.5 to 1.2, from about 0.7 to 1.5, from about 0.7 to 1.2, from about 0.8 to 1.5, and from about 0.8 to 1.2.

### [Adhesion-Enhancing Agent Layer 13]

An adhesion-enhancing agent layer 13 is a layer that is optionally provided for the purpose of strongly bonding the base material 11 and the first and second polyolefin layers 12a and 12b (see FIG. 7). The adhesion-enhancing agent layer 13 may be provided between the base material 11 and only one of or both the first and second polyolefin layers 12a and 12b.

The adhesion-enhancing agent layer 13 may be formed using a known adhesion-enhancing agent, such as an isocyanate-, polyethyleneimine-, polyester-, polyurethane-, or polybutadiene-based adhesion-enhancing agent. From the viewpoint of further improving the electrolytic solution resistance, the adhesion-enhancing agent layer 13 is preferably formed with an isocyanate-based adhesion-enhancing agent of the above. An isocyanate-based adhesion-enhancing agent containing an isocyanate component selected from triisocyanate monomers and polymeric MDI has excellent lamination strength, and exhibits less reduction in lamination strength after immersion in an electrolytic solution. The adhesion-enhancing agent layer 13 is particularly preferably formed using an adhesion-enhancing agent containing triphenylmethane-4,4',4"-triisocyanate, which is a triisocyanate monomer, or polymethylene polyphenyl polyisocyanate (NCO content: about 30%, viscosity: 200 to 700 mPa·s), which is polymeric MDI. Alternatively, the adhesion-enhancing agent layer 13 is preferably formed using a two-liquid curable adhesion-enhancing agent containing, as a base agent, tris(p-isocyanatophenyl)thiophosphate, which is a triisocyanate monomer, or a polyethyleneimine-based adhesion-enhancing agent, and containing polycarbodiimide as a crosslinking agent.

The adhesion-enhancing agent layer 13 may be formed by applying an adhesion-enhancing agent using a known coating method, such as a bar coating method, a roll coating method, or a gravure coating method, and drying. In the case of an adhesion-enhancing agent containing a triisocyanate, the amount of the adhesion-enhancing agent to be applied is about 20 to 100 mg/m², and preferably about 40 to 60 mg/m². In the case of an adhesion-enhancing agent containing polymeric MDI, the amount of the adhesion-enhancing agent to be applied is about 40 to 150 mg/m², and preferably about 60 to 100 mg/m². In the case of a two-liquid curable adhesion-enhancing agent containing a polyethyleneimine-based adhesion-enhancing agent as a base agent, and containing polycarbodiimide as a crosslinking agent, the amount of the adhesion-enhancing agent to be applied is about 5 to 50 mg/m², and preferably about 10 to 30 mg/m². The triisocyanate monomer is a monomer having three isocyanate groups in one molecule. Polymeric MDI is a mixture of MDI and MDI oligomers formed by polymerization of MDI, and is represented by the following formula:

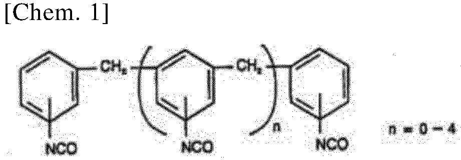

The adhesive film 1 for metal terminals of the present disclosure may be produced by laminating the first and second polyolefin layers 12a and 12b onto both surfaces of the base material 11. Lamination between the base material 11 and the first and second polyolefin layers 12a and 12b may be accomplished using a known method such as an extrusion lamination method or a thermal lamination method. When the base material 11 and each of the first and second polyolefin layers 12a and 12 are to be laminated with the adhesion-enhancing agent layer 13 interposed therebetween, for example, the adhesion-enhancing agent for forming the adhesion-enhancing agent layer 13 may be applied onto the base material 11 using the above-described method and dried, and then each of the first and second polyolefin layers 12a and 12b may be laminated on the adhesion-enhancing agent layer 13.

The method of interposing the adhesive film 1 for metal terminals between the metal terminal 2 and the power storage device packaging material 3 is not limited; for example, as shown in FIGS. 1 to 3, the adhesive film 1 for metal terminals may be wound around the metal terminal 2 in the region where the metal terminal 2 is held between the power storage device packaging materials 3. Alternatively, although this is not illustrated, the adhesive film 1 for metal terminals may be disposed on both surfaces of each of the metal terminals 2 as to as cross the two metal terminals 2, in the region where each metal terminal 2 is held between the power storage device packaging materials 3.

### [Metal Terminal 2]

The adhesive film 1 for metal terminals of the present disclosure is used by being interposed between the metal terminal 2 and the power storage device packaging material 3. The metal terminal 2 is a conductive member electrically connected to an electrode (the positive electrode or the negative electrode) of the power storage device element 4, and is formed of a metal material. Examples of the metal material that forms the metal terminal 2 include, but are not limited to, aluminum, nickel, and copper. For example, the metal terminal 2 connected to the positive electrode of a lithium ion power storage device is typically formed of aluminum. The metal terminal connected to the negative electrode of a lithium ion power storage device is typically formed of copper, nickel.

Preferably, the surface of the metal terminal 2 is subjected to a chemical conversion treatment, from the viewpoint of improving the electrolytic solution resistance. For example, when the metal terminal 2 is formed of aluminum, specific examples of the chemical conversion treatment include a known method in which a corrosion-resistant film composed of a phosphate, a chromate, a fluoride, a triazine-thiol compound, is formed. Preferred among methods of forming a corrosion-resistant film is a phosphoric acid chromate treatment that uses a material composed of three components, i.e., a phenol resin, a chromium(III) fluoride compound, and phosphoric acid.

The dimensions of the metal terminal 2 may be appropriately adjusted depending on the dimensions of the power storage device to be used, for example. The thickness of the metal terminal 2 is preferably about 50 to 1,000 µm, and more preferably about 70 to 800 µm. The length of the metal terminal 2 is preferably about 1 to 200 mm, and more preferably about 3 to 150 mm. The width of the metal terminal 2 is preferably about 1 to 200 mm, and more preferably about 3 to 150 mm.

### [Power Storage Device Packaging Material 3]

The power storage device packaging material 3 is, for example, a power storage device packaging material having a laminated structure formed of a laminate having at least a base material layer 31, the barrier layer 33, and the heat-sealable resin layer 35 in this order. FIG. 8 shows one embodiment of the cross-sectional structure of the power storage device packaging material 3, in which the base material layer 31, an optional adhesive agent layer 32, the barrier layer 33, an optional adhesive layer 34, and the heat-sealable resin layer 35 are laminated in this order. In the power storage device packaging material 3, the base material layer 31 is the outermost layer, and the heat-sealable resin layer 35 is the innermost layer. During the assembly of a power storage device, surfaces of the heat-sealable resin layers 35 positioned on the periphery of the power storage device element 4 are contacted and heat-sealed with each other to hermetically seal the power storage device element 4, such that the power storage device element 4 is sealed. While FIGS. 1 to 3 illustrate a power storage device 10 that uses the embossed-type power storage device packaging material 3 molded by embossing molding, for example, the power storage device packaging material 3 may also be of a pouched type that is not molded. The pouched type includes a three-side seal type, a four-side seal type, and a pillow type, and any of these types may be used.

While the thickness of the laminate that forms the power storage device packaging material 3 is not limited, the upper limit is preferably about 180 µm or less, about 160 µm or less, about 155 µm or less, about 140 µm or less, about 130 µm or less, or about 120 µm or less, from the viewpoint of reducing costs, improving the energy density. On the other hand, the lower limit is preferably about 35 µm or more, about 45 µm or more, about 60 µm or more, or about 80 µm or more, from the viewpoint of maintaining the function of the power storage device packaging material 3 to protect the power storage device element 4. Preferred ranges include from about 35 to 180 µm, from about 35 to 160 µm, from about 35 to 155 µm, from about 35 to 140 µm, from about 35 to 130 µm, from about 35 to 120 µm, from about 45 to 180 µm, from about 45 to 160 µm, from about 45 to 155 µm, from about 45 to 140 µm, from about 45 to 130 µm, from about 45 to 120 µm, from about 60 to 180 µm, from about 60 to 160 µm, from about 60 to 155 µm, from about 60 to 140 µm, from about 60 to 130 µm, from about 60 to 120 µm, from about 80 to 180 µm, from about 80 to 160 µm, from about 80 to 155 µm, from about 80 to 140 µm, from about 80 to 130 µm, and from about 80 to 120 µm.

### (Base Material Layer 31)

In the power storage device packaging material 3, the base material layer 31 is a layer that functions as the base material of the power storage device packaging material, and forms the outermost layer side.

The material that forms the base material layer 31 is not limited as long as it has insulation properties. Examples of the material that forms the base material layer 31 include polyesters, polyamides, epoxy, acrylic, fluororesins, polyurethanes, silicone resins, phenol, polyetherimides, polyimides, and mixtures or copolymers thereof. A polyester, such as polyethylene terephthalate or polybutylene terephthalate, which has the advantage of having excellent electrolytic solution resistance, and being unlikely to cause whitening due to attachment of the electrolytic solution, is suitably used as the material that forms the base material layer 31. Moreover, a polyamide film, which has excellent stretchability, and can prevent whitening due to a resin fracture in the base material layer 31 during molding, is suitably used as the material that forms the base material layer 31.

The base material layer 31 may be formed of a uniaxially or biaxially stretched resin film, or may be formed of an unstretched resin film. Among the above, a uniaxially or biaxially stretched resin film, particularly a biaxially stretched resin film, which has improved heat resistance through oriented crystallization, is suitably used as the base material layer 31.

Preferred among the above as the resin film that forms the base material layer 31 are nylons and polyesters, and more preferred are biaxially stretched nylons and biaxially stretched polyesters.

The base material layer 31 can also be laminated with a resin film made of a different material, in order to improve the pinhole resistance, and the insulation properties when used as a packaging material for power storage devices. Specific examples include a multilayer structure in which a polyester film and a nylon film are laminated, and a multilayer structure in which a biaxially stretched polyester and a biaxially stretched nylon are laminated. When the base material layer 31 has a multilayer structure, the resin films may be bonded with an adhesive, or may be directly laminated without an adhesive. Examples of methods of bonding the resin films without an adhesive include methods in which the resin films are bonded in a heat-melted state, such as a co-extrusion method, a sandwich lamination method, and a thermal lamination method.

The base material layer 31 may be subjected to a friction-reducing treatment beforehand to improve moldability. When the base material layer 31 is subjected to a friction-reducing treatment, the coefficient of friction of the surface of the base material layer 31 is 1.0 or less, for example, although not limited thereto. Examples of the friction-reducing treatment of the base material layer 31 include matting treatment, formation of a thin film layer of a slipping agent, and a combination thereof.

The thickness of the base material layer 31 is, for example, about 10 to 50 µm, and preferably about 15 to 30 µm.

### (Adhesive Agent Layer 32)

In the power storage device packaging material 3, the adhesive agent layer 32 is a layer that is optionally disposed on the base material layer 31 to impart adhesion to the base material layer 31. That is, the adhesive agent layer 32 is provided between the base material layer 31 and the barrier layer 33.

The adhesive agent layer 32 is formed of an adhesive capable of bonding the base material layer 31 and the barrier layer 33. The adhesive to be used for forming the adhesive agent layer 32 may be a two-liquid curable adhesive or a one-liquid curable adhesive. The adhesion mechanism of the adhesive used for forming the adhesive agent layer 32 is not limited, and may be any of a chemical reaction type, a solvent volatilization type, a heat melting type, a heat pressing type.

Preferred examples of the resin component of the adhesive that can be used to form the adhesive agent layer 32 include a polyurethane-based two-liquid curable adhesive; and a polyamide, a polyester, or a blend resin of any of these resins and a modified polyolefin, from the viewpoint of having excellent extensibility, excellent durability and yellowing-inhibiting action under high-humidity conditions, excellent thermal degradation-inhibiting action during heat-sealing, and effectively inhibiting delamination by preventing a decrease in the lamination strength between the base material layer 31 and the barrier layer 33.

The adhesive agent layer 32 may be multilayered with different adhesive components. When the adhesive agent layer 32 is to be multilayered with different adhesive components, from the viewpoint of improving the lamination strength between the base material layer 31 and the barrier layer 33, it is preferred to select a resin having excellent adhesion to the base material layer 31 as the adhesive component to be disposed on the base material layer 31 side, and select an adhesive component having excellent adhesion to the barrier layer 33 as the adhesive component to be disposed on the barrier layer 33 side. When the adhesive agent layer 32 is to be multilayered with different adhesive components, specific examples of preferred adhesive components to be disposed on the barrier layer 33 side include acid-modified polyolefins, metal-modified polyolefins, mixed resins of polyesters and acid-modified polyolefins, and resins containing copolyesters.

The thickness of the adhesive agent layer 32 is, for example, about 2 to 50 µm, and preferably about 3 to 25 µm.

### (Barrier Layer 33)

In the power storage device packaging material, the barrier layer 33 is a layer that functions to improve the strength of the power storage device packaging material, and prevent the ingress of water vapor, oxygen, light, into the power storage device. The barrier layer 33 is preferably a metal layer, that is, a layer formed of a metal. Specific examples of the metal that forms the barrier layer 33 include aluminum, stainless steel, and titanium, with aluminum being preferred. The barrier layer 33 may be formed of, for example, a metal foil or a vapor-deposited metal film, a vapor-deposited inorganic oxide film, a vapor-deposited carbon-containing inorganic oxide film, or a film provided with any of these vapor-deposited films. The barrier layer 33 is preferably formed of a metal foil, and more preferably formed of an aluminum foil. From the viewpoint of preventing the occurrence of creases and pinholes in the barrier layer 33 during the production of the power storage device packaging material, the barrier layer is still more preferably formed of a soft aluminum foil, for example, annealed aluminum (JIS H4160: 1994 A8021 H-O, JIS H4160: 1994 A8079 H-O, JIS H4000: 2014 A8021 P-O, and JIS H4000: 2014 A8079 P-O).

The thickness of the barrier layer 33 is preferably about 10 to 200 µm, and more preferably about 20 to 100 µm, from the viewpoint of making the occurrence of pinholes less likely during molding, while reducing the thickness of the power storage device packaging material.

Preferably, at least one surface, preferably both surfaces, of the barrier layer 33 is/are subjected to a chemical conversion treatment, in order to stabilize the adhesiveness, and prevent dissolution or corrosion, for example. As used herein, the chemical conversion treatment refers to a treatment for forming a corrosion-resistant film on a surface of the barrier layer.

### [Adhesive Layer 34]

In the power storage device packaging material 3, the adhesive layer 34 is a layer that is optionally provided between the barrier layer 33 and the heat-sealable resin layer 35, in order to strongly bond the heat-sealable resin layer 35.

The adhesive layer 34 is formed of an adhesive capable of bonding the barrier layer 33 and the heat-sealable resin layer 35. While the composition of the adhesive used for forming the adhesive layer is not limited, it is, for example, a resin composition containing an acid-modified polyolefin. Examples of the acid-modified polyolefin include the same acid-modified polyolefins as those mentioned as the first and second polyolefin layers 12a and 12b.

The thickness of the adhesive layer 34 is, for example, about 1 to 40 µm, and preferably about 2 to 30 µm.

### [Heat-Sealable Resin Layer 35]

In the power storage device packaging material 3, the heat-sealable resin layer 35 is a layer that corresponds to the innermost layer, and is heat-sealed with another heat-sealable resin layer during the assembly of a power storage device to hermetically seal the power storage device element.

While the resin component to be used as the heat-sealable resin layer 35 is not limited as long as it can be heat-sealed, examples include a polyolefin and a cyclic polyolefin.

Specific examples of the polyolefin include polyethylene, such as low-density polyethylene, medium-density polyethylene, high-density polyethylene, and linear low-density polyethylene; crystalline or amorphous polypropylene, such as homopolypropylene, block copolymers of polypropylene (for example, block copolymers of propylene and ethylene), and random copolymers of polypropylene (for example, random copolymers of propylene and ethylene); and terpolymers of ethylene-butene-propylene. Preferred among these polyolefins are polyethylene and polypropylene.

The cyclic polyolefin is a copolymer of an olefin and a cyclic monomer. Examples of the olefin as a constituent monomer of the cyclic polyolefin include ethylene, propylene, 4-methyl-1-pentene, butadiene, and isoprene. Examples of the cyclic monomer as a constituent monomer of the cyclic polyolefin include cyclic alkenes, such as norbornene; specifically, cyclic dienes, such as cyclopentadiene, dicyclopentadiene, cyclohexadiene, and norbornadiene. Preferred among these polyolefins are cyclic alkenes, and more preferred is norbornene. Examples of constituent monomers also include styrene.

Preferred among these resin components are a crystalline or amorphous polyolefin, a cyclic polyolefin, and a blend polymer thereof; and more preferred are polyethylene, polypropylene, a copolymer of ethylene and norbornene, and a blend polymer of two or more of the above.

The heat-sealable resin layer 35 may be formed with one resin component alone, or may be formed with a blend polymer made of a combination of two or more resin components. Furthermore, the heat-sealable resin layer 35 may be formed of only one layer, or may be formed of two or more layers with the same resin component or different resin components.

While the thickness of the heat-sealable resin layer 35 is not limited, it is about 2 to 2,000 µm, preferably about 5 to 1,000 µm, and more preferably about 10 to 500 µm.

### 2. Power Storage Device 10

The power storage device 10 of the present disclosure comprises the power storage device element 4 comprising at least a positive electrode, a negative electrode, and an electrolyte, the power storage device packaging material 3 for sealing the power storage device element 4, and the metal terminal 2 electrically connected to each of the positive electrode and the negative electrode and protruding outside the power storage device packaging material 3. In the power storage device 10 of the present disclosure, the adhesive film 1 for metal terminals of the present disclosure is interposed between the metal terminal 2 and the power storage device packaging material 3. That is, the power storage device 10 of the present disclosure may be produced by a method comprising the step of interposing the adhesive film 1 for metal terminals of the present disclosure between the metal terminal 2 and the power storage device packaging material 3.

Specifically, the power storage device element including at least a positive electrode, a negative electrode, and an electrolyte is covered with the power storage device packaging material 3 such that in a state wherein the metal terminal 2 connected to each of the positive electrode and the negative electrode protrudes outside, the adhesive film 1 for metal terminals of the present disclosure is interposed between the metal terminal 2 and the heat-sealable resin layer 35, and a flange of the power storage device packaging material (region where the heat-sealable resin layer 35 is brought into contact with the other heat-sealable resin layer 35, i.e., the peripheral region 3a of the power storage device packaging material) can be formed on the periphery of the power storage device element 4, and then the heat-sealable resin layers 35 in the flange are heat-sealed to hermetically seal the power storage device element. As a result, the power storage device 10 that uses the power storage device packaging material 3 is provided. When the power storage device packaging material 3 is used to house the power storage device element 4, it is used such that the heat-sealable resin layer 35 of the power storage device packaging material 3 is positioned on the inner side (surface in contact with the power storage device element 4) thereof.

The power storage device packaging material of the present disclosure is suitable for use in power storage devices, such as batteries (including condensers and capacitors). The power storage device packaging material of the present disclosure may be used for either primary batteries or secondary batteries, preferably secondary batteries. While the type of secondary batteries to which the power storage device packaging material of the present disclosure is applied is not limited, examples include lithium ion batteries, lithium ion polymer batteries, all-solid-state batteries, lead storage batteries, nickel-hydrogen storage batteries, nickel-cadmium storage batteries, nickel-iron storage batteries, nickel-zinc storage batteries, silver oxide-zinc storage batteries, metal-air batteries, polyvalent cation batteries, condensers, and capacitors. Among these secondary batteries, preferred secondary batteries to which the power storage device packaging material of the present disclosure is applied include lithium ion batteries and lithium ion polymer batteries.

### Examples

The present disclosure will be hereinafter described in detail with reference to examples and comparative examples; however, the present disclosure is not limited to the examples.

### Examples 1 to 3 and Comparative Examples 1 to 10

### <Production of Adhesive Films for Metal Terminals>

Polypropylene films (hereinafter sometimes referred to as "PP layers") each having a melting point and a MFR as shown in Table 1 and having a thickness as shown in Table 2 were used as base materials. Maleic acid-modified polypropylenes (hereinafter sometimes referred to as "PPa") each having a melting point and a melt mass-flow rate (MFR) as shown in Table 1 were extruded by a T-die extruder onto one surface of the base material to form first polyolefin layers (PPa layers) each having a thickness as shown in Table 2. Next, PPa was extruded by a T-die extruder onto the other surface of the base material to form second polyolefin layers (PPa layers) each having a thickness as shown in Table 2, to obtain adhesive films for metal terminals in which a PPa layer/a PP layer/a PPa layer were laminated in this order.

The tensile elastic modulus of each adhesive film for metal terminals shown in Table 2 was adjusted by adjusting the melting points, the MFRs, the thicknesses, and the thickness ratio of the PPa layers and PP layer, as well as conditions in the production of the adhesive film 1 for metal terminals, such as a T-die and inflation (for example, the extrusion width from the T-die, the stretching ratio, the stretching speed, and the heat treatment temperature).

### <Measurement of Melting Points>

The melting point of each of the PP layers and the PPa layers shown in Table 1 is the value as measured using the following method: A differential scanning calorimeter (DSC, the differential scanning calorimeter Q200 from TA Instruments Inc.) was used to measure a melting peak temperature twice. Specifically, according to the procedure as defined in JIS K 7121: 2012 (Testing Methods for Transition Temperatures of Plastics) (Supplement 1 to JIS K 7121: 1987)), by differential scanning calorimetry (DSC), each PP layer or PPa layer was held at -20°C for 10 minutes and then heated from -20°C to 250°C at a heating rate of 10°C/min to measure the first melting peak temperature P (°C), and thereafter held at 250°C for 10 minutes. Next, the PP layer or PPa layer was cooled from 250°C to -20°C at a cooling rate of 10°C/min and held for 10 minutes. The PP layer or PPa layer was further heated from -20°C to 250°C at a heating rate of 10°C/min to measure the second melting peak temperature Q (°C). The flow rate of nitrogen gas was 50 ml/min. Using the above procedure, the first measured melting peak temperature P (°C) and the second measured melting peak temperature Q (°C) were obtained, and the temperature with the maximum peak was defined as the melting point.

### <Melt Mass-Flow Rate (MFR)>

The melt mass-flow rate (MFR) of each of the PP layers and the PPa layers shown in Table 1 is the value (g/10 min) at 230°C as measured in accordance with JIS K 7210-1: 2014 (ISO 1133-1: 2011).

**[Table 1]**

| | PPa Layer | | **PP** Layer | |
|---|---|---|---|---|
| | Melting Point (°C) | MFR (g/10 min) | Melting Point (°C) | MFR (g/10 min) |
| Example 1 | 140 | 7.0 | 164 | 3.0 |
| Example 2 | 149 | 8.0 | 167 | 2.0 |
| Example 3 | 149 | 8.0 | 167 | 2.0 |
| Comparative Example 1 | 140 | 9.2 | 142 | 2.3 |
| Comparative Example 2 | 140 | 9.2 | 142 | 2.3 |
| Comparative Example 3 | 140 | 9.2 | 142 | 2.3 |
| Comparative Example 4 | 140 | 9.2 | 160 | 3.9 |
| Comparative Example 5 | 140 | 9.2 | 160 | 3.9 |
| Comparative Example 6 | 140 | 9.2 | 145 | 7.0 |
| Comparative Example 7 | 140 | 9.2 | 165 | 7.0 |
| Comparative Example 8 | 140 | 9.2 | 142 | 2.3 |
| Comparative Example 9 | 135 | 5.7 | 142 | 2.3 |
| Comparative Example 10 | 140 | 9.2 | 142 | 2.3 |

### <Tensile Elastic Modulus B before Heating>

In accordance with JIS K7161-1 (ISO527-1), the tensile elastic modulus B of the adhesive film for metal terminals (the adhesive film for metal terminals before the heating in <Tensile Elastic Modulus A after Heating> below) in an environment at 25°C was measured. Specifically, each of the adhesive films for metal terminals obtained in the examples and comparative examples was cut into a rectangular shape with a width (TD) of 15 mm and a length (MD) of 50 mm. Next, for the adhesive film for metal terminals, a stress-strain curve for the test sample was acquired using a Tensilon universal material testing machine (RTG-1210 manufactured by A&D Co., Ltd.) in an environment at 25°C, at a tensile speed of 300 mm/min and a chuck distance of 30 mm. The tensile elastic modulus B of the adhesive film for metal terminals before heating was obtained from the slope of the line connecting the two points of strains of 0.05% and 0.25%. The results are shown in Table 2.

### <Tensile Elastic Modulus A after Heating>

The tensile elastic modulus after heating under each temperature condition (140, 160, or 180°C) shown in Table 2 for 12 seconds was measured according to the following procedure. Initially, each of the adhesive films for metal terminals of the examples and comparative examples was cut into a rectangular shape with a width (TD) of 15 mm and a length (MD) of 50 mm. The adhesive film for metal terminals was placed on a hot plate heated to each temperature and allowed to stand for 12 seconds, and then immediately placed in an environment at 25°C under atmospheric pressure and allowed to stand for 1 hour to obtain a test sample. Next, a stress-strain curve for the test sample was acquired using a Tensilon universal material testing machine (RTG-1210 manufactured by A&D Co., Ltd.) in an environment at 25°C under atmospheric pressure, at a tensile speed of 300 mm/min and a chuck distance of 30 mm. The tensile elastic modulus A of the adhesive film for metal terminals after heating was obtained from the slope of the line connecting the two points of strains of 0.05% and 0.25%. The results are shown in Table 2.

### <Measurement of Adhesion Strength between the Adhesive Film for Metal Terminals and the Metal Terminal at Each Temperature>

Aluminum (JIS H4160: 1994 A8079H-O) with a length of 50 mm, a width of 22.5 mm, and a thickness of 0.2 mm was prepared as a metal terminal. Each of the adhesive films for metal terminals obtained in the examples and comparative examples was cut to a width of 15 mm. Next, the adhesive film for metal terminals was placed on the metal terminal to obtain a laminate of the metal terminal/the adhesive film. Next, the laminate with a tetrafluoroethylene-ethylene copolymer film (ETFE film, thickness: 100 µm) overlaid thereon was placed on a hot plate heated to 140, 160, or 180°C, and simultaneously a 500 g weight with a sponge was placed thereon, and the laminate was allowed to stand for 12 seconds to heat-seal the adhesive film to the metal terminal. The heat-sealed laminate was allowed to cool naturally to 25°C. Next, the adhesive film for metal terminals was peeled off from the metal terminal using a Tensilon universal material testing machine (RTG-1210 manufactured by A&D Co., Ltd.) in an environment at 25°C. The maximum strength at the time of peeling was defined as the adhesion strength (N/15 mm) to the metal terminal. The peeling speed was 175 mm/min, the peeling angle was 180°, the chuck distance was 30 mm, and the average of three measurements was used. The results are shown in Table 2.

**[Table 2]**

| | Structure of Adhesive Film for Metal Terminals | | | | | Elastic Modulus (MPa) | | | | Difference in Elastic Modulus (after Heating - before Heating) | | | Adhesion Strength (N/15 mm) | | |
|---|---|---|---|---|---|---|---|---|---|---|---|---|---|---|---|
| | PPa Layer (µm) | PP Layer (µm) | PPa Layer (µm) | Entire Thickness (µm) | Thickness Ratio PP/Both PPa Layers | | | | | | | | | | |
| | | | | | | before Heating | after Heating at 140°C | after Heating at 160°C | after Heating at 180°C | 140°C | 160°C | 180°C | 140°C | 160°C | 180°C |
| Example 1 | 35.0 | 80.0 | 35.0 | 150 | 1.1 | 786 | 675 | 681 | 570 | -111 | -105 | -216 | 37.1 | 51.7 | 51.0 |
| Example 2 | 35.0 | 80.0 | 35.0 | 150 | 1.1 | 768 | 686 | 761 | 657 | -82 | -7 | -111 | 37.0 | 52.3 | 51.6 |
| Example 3 | 45.0 | 60.0 | 45.0 | 150 | 0.7 | 780 | 698 | 737 | 707 | -82 | -43 | -73 | 33.1 | 50.9 | 53.5 |
| Comparative Example 1 | 25.0 | 100.0 | 25.0 | 150 | 2.0 | 444 | 543 | 578 | 510 | 99 | 134 | 66 | 19.2 | 37.1 | 47.5 |
| Comparative Example 2 | 37.5 | 75.0 | 37.5 | 150 | 1.0 | 445 | 559 | 543 | 468 | 114 | 98 | 23 | 20.6 | 36.6 | 42.0 |
| Comparative Example 3 | 15.0 | 120.0 | 15.0 | 150 | 4.0 | 458 | 561 | 571 | 500 | 103 | 113 | 42 | 20.0 | 35.5 | 47.7 |
| Comparative Example 4 | 30.0 | 80.0 | 30.0 | 140 | 1.3 | 417 | 444 | 514 | 460 | 27 | 97 | 43 | 23.1 | 41.9 | 37.4 |
| Comparative Example 5 | 35.0 | 80.0 | 35.0 | 150 | 1.1 | 421 | 501 | 494 | 465 | 80 | 73 | 44 | 23.9 | 41.8 | 41.6 |
| Comparative Example 6 | 25.0 | 100.0 | 25.0 | 150 | 2.0 | 458 | 579 | 576 | 573 | 121 | 118 | 115 | 16.1 | 37.6 | 50.1 |
| Comparative Example 7 | 25.0 | 100.0 | 25.0 | 150 | 2.0 | 485 | 589 | 641 | 577 | 104 | 156 | 92 | 10.6 | 28.0 | 51.8 |
| Comparative Example 8 | 30.0 | 100.0 | 30.0 | 160 | 1.7 | 442 | 580 | 561 | 502 | 138 | 119 | 60 | 14.5 | 39.6 | 47.1 |
| Comparative Example 9 | 25.0 | 100.0 | 25.0 | 150 | 2.0 | 414 | 521 | 537 | 499 | 107 | 123 | 85 | 18.2 | 45.0 | 45.2 |
| Comparative Example 10 | 16.7 | 66.6 | 16.7 | 100 | 2.0 | 437 | 537 | 512 | 333 | 100 | 75 | -104 | 15.4 | 28.9 | 35.7 |

### Reference Signs List

1: adhesive film for metal terminals
2: metal terminal
3: power storage device packaging material
3a: peripheral region of power storage device packaging material
4: power storage device element
10: power storage device
11: base material
12a: first polyolefin layer
12b: second polyolefin layer
13: adhesion-enhancing agent layer
31: base material layer
32: adhesive agent layer
33: barrier layer
34: adhesive layer
35: heat-sealable resin layer

## Claims

1. An adhesive film for metal terminals, which is to be interposed between a metal terminal electrically connected to an electrode of a power storage device element and a power storage device packaging material for sealing the power storage device element,
wherein a value of the following tensile elastic modulus A after heating is smaller than a value of the following tensile elastic modulus B before heating:
tensile elastic modulus A after heating: a tensile elastic modulus as measured as described in the description in an environment at a temperature of 25°C, after the adhesive film for metal terminals is allowed to stand in a heating environment at a temperature of 140°C for 12 seconds, and then in an environment at a temperature of 25°C for 1 hour;
tensile elastic modulus B before heating: a tensile elastic modulus as measured as described in the description in an environment at a temperature of 25°C.

2. The adhesive film for metal terminals according to claim 1, wherein the tensile elastic modulus B before heating is 580 MPa or more.

3. The adhesive film for metal terminals according to claim 1 or 2, wherein a difference in tensile elastic modulus calculated by subtracting the value of the tensile elastic modulus B before heating from the value of the tensile elastic modulus A after heating is -20 MPa or less.

4. The adhesive film for metal terminals according to any one of claims 1 to 3, wherein the tensile elastic modulus A after heating is 580 MPa or more and 700 MPa or less.

5. The adhesive film for metal terminals according to any one of claims 1 to 4, wherein the adhesive film for metal terminals has a thickness of 140 µm or more.

6. The adhesive film for metal terminals according to any one of claims 1 to 5, wherein the adhesive film for metal terminals is formed of a laminate comprising a first polyolefin layer, a base material, and a second polyolefin layer in this order, wherein the base material is formed by a material including at least one of polyolefins, polyamides, polyesters, epoxy resins, acrylic resins, fluororesins, silicone resins, phenol resins, polyetherimides, polyimides, polycarbonates, and mixtures or copolymers thereof.

7. The adhesive film for metal terminals according to claim 6, wherein a resin contained in the base material contains a polyolefin backbone.

8. The adhesive film for metal terminals according to claim 6 or 7, wherein the first polyolefin layer and the second polyolefin layer contain an acid-modified polyolefin.

9. The adhesive film for metal terminals according to any one of claims 1 to 8, wherein the power storage device packaging material is formed of a laminate comprising at least a base material layer, a barrier layer, and a heat-sealable resin layer in this order, and
the adhesive film for metal terminals is interposed between the heat-sealable resin layer and the metal terminal,
wherein the barrier layer is a metal layer.

10. A metal terminal with an adhesive film for metal terminals attached thereto, comprising the adhesive film for metal terminals according to any one of claims 1 to 9, wherein the adhesive film for metal terminals is attached to a metal terminal.

11. A power storage device comprising the power storage device element comprising at least a positive electrode, a negative electrode, and an electrolyte, the power storage device packaging material for sealing the power storage device element, and the metal terminal electrically connected to each of the positive electrode and the negative electrode and protruding outside the power storage device packaging material, wherein
the adhesive film for metal terminals according to any one of claims 1 to 9 is interposed between the metal terminal and the power storage device packaging material.

12. A method for producing a power storage device comprising the power storage device element comprising at least a positive electrode, a negative electrode, and an electrolyte, the power storage device packaging material for sealing the power storage device element, and the metal terminal electrically connected to each of the positive electrode and the negative electrode and protruding outside the power storage device packaging material,
the method comprising the step of interposing the adhesive film for metal terminals according to any one of claims 1 to 9 between the metal terminal and the power storage device packaging material, and sealing the power storage device element with the power storage device packaging material.

## Patentansprüche

1. Klebefolie für Metallanschlüsse, die zwischen einem Metallanschluss, der elektrisch mit einer Elektrode eines Energiespeichervorrichtungselements verbunden ist, und einem Energiespeichervorrichtungs-Verpackungsmaterial zum Abdichten des Energiespeichervorrichtungselements angeordnet werden soll,
wobei ein Wert des folgenden Zugelastizitätsmoduls A nach dem Erwärmen kleiner ist als ein Wert des folgenden Zugelastizitätsmoduls B vor dem Erwärmen:
Zugelastizitätsmodul A nach dem Erwärmen: ein Zugelastizitätsmodul, gemessen wie in der Beschreibung angegeben in einer Umgebung bei einer Temperatur von 25 °C,
nachdem die Klebefolie für Metallanschlüsse in einer Erwärmungsumgebung bei einer Temperatur von 140 °C für 12 Sekunden und anschließend in einer Umgebung bei einer Temperatur von 25 °C für 1 Stunde stehen gelassen worden ist;
Zugelastizitätsmodul B vor dem Erwärmen: ein Zugelastizitätsmodul, gemessen wie in der Beschreibung angegeben in einer Umgebung bei einer Temperatur von 25 °C.

2. Klebefolie für Metallanschlüsse nach Anspruch 1, wobei das Zugelastizitätsmodul B vor dem Erwärmen 580 MPa oder mehr beträgt.

3. Klebefolie für Metallanschlüsse nach Anspruch 1 oder 2, wobei eine Differenz der Zugelastizitätsmodule, berechnet durch Subtrahieren des Wertes des Zugelastizitätsmoduls B vor dem Erwärmen von dem Wert des Zugelastizitätsmoduls A nach dem Erwärmen, -20 MPa oder weniger beträgt.

4. Klebefolie für Metallanschlüsse nach einem der Ansprüche 1 bis 3, wobei das Zugelastizitätsmodul A nach dem Erwärmen 580 MPa oder mehr und 700 MPa oder weniger beträgt.

5. Klebefolie für Metallanschlüsse nach einem der Ansprüche 1 bis 4, wobei die Klebefolie für Metallanschlüsse eine Dicke von 140 µm oder mehr aufweist.

6. Klebefolie für Metallanschlüsse nach einem der Ansprüche 1 bis 5, wobei die Klebefolie für Metallanschlüsse aus einem Laminat gebildet ist, das eine erste Polyolefinschicht, ein Basismaterial und eine zweite Polyolefinschicht in dieser Reihenfolge umfasst, wobei das Basismaterial aus einem Material gebildet ist, das mindestens eines von Polyolefinen, Polyamiden, Polyestern, Epoxidharzen, Acrylharzen, Fluorharzen, Silikonharzen, Phenolharzen, Polyetherimiden, Polyimiden, Polycarbonaten und Gemischen oder Copolymeren davon einschließt.

7. Klebefolie für Metallanschlüsse nach Anspruch 6, wobei ein in dem Basismaterial enthaltener Harzbestandteil ein Polyolefingrundgerüst aufweist.

8. Klebefolie für Metallanschlüsse nach Anspruch 6 oder 7, wobei die erste Polyolefinschicht und die zweite Polyolefinschicht ein säuremodifiziertes Polyolefin enthalten.

9. Klebefolie für Metallanschlüsse nach einem der Ansprüche 1 bis 8, wobei das Energiespeichervorrichtungs-Verpackungsmaterial aus einem Laminat gebildet ist, das mindestens eine Basismaterialschicht, eine Barriereschicht und eine heißsiegelbare Harzschicht in dieser Reihenfolge umfasst, und
die Klebefolie für Metallanschlüsse zwischen der heißsiegelbaren Harzschicht und dem Metallanschluss angeordnet ist,
wobei die Barriereschicht eine Metallschicht ist.

10. Metallanschluss mit einer daran angebrachten Klebefolie für Metallanschlüsse, umfassend die Klebefolie für Metallanschlüsse nach einem der Ansprüche 1 bis 9, wobei die Klebefolie für Metallanschlüsse an einem Metallanschluss angebracht ist.

11. Energiespeichervorrichtung, umfassend das Energiespeichervorrichtungselement, das mindestens eine positive Elektrode, eine negative Elektrode und einen Elektrolyten umfasst, das Energiespeichervorrichtungs-Verpackungsmaterial zum Abdichten des Energiespeichervorrichtungselements und den Metallanschluss, der elektrisch jeweils mit der positiven Elektrode und der negativen Elektrode verbunden ist und aus dem Energiespeichervorrichtungs-Verpackungsmaterial herausragt,
wobei die Klebefolie für Metallanschlüsse nach einem der Ansprüche 1 bis 9 zwischen dem Metallanschluss und dem Energiespeichervorrichtungs-Verpackungsmaterial angeordnet ist.

12. Verfahren zur Herstellung einer Energiespeichervorrichtung, umfassend das Energiespeichervorrichtungselement, das mindestens eine positive Elektrode, eine negative Elektrode und einen Elektrolyten umfasst, das Energiespeichervorrichtungs-Verpackungsmaterial zum Abdichten des Energiespeichervorrichtungselements und den Metallanschluss, der elektrisch jeweils mit der positiven Elektrode und der negativen Elektrode verbunden ist und aus dem Energiespeichervorrichtungs-Verpackungsmaterial herausragt,
wobei das Verfahren den Schritt des Anordnens der Klebefolie für Metallanschlüsse nach einem der Ansprüche 1 bis 9 zwischen dem Metallanschluss und dem Energiespeichervorrichtungs-Verpackungsmaterial und des Abdichtens des Energiespeichervorrichtungselements mit dem Energiespeichervorrichtungs-Verpackungsmaterial umfasst.

## Revendications

1. Film adhésif pour bornes métalliques, qui doit être interposé entre une borne métallique connectée électriquement à une électrode d'un élément de dispositif de stockage de puissance et un matériau d'emballage de dispositif de stockage de puissance pour sceller l'élément de dispositif de stockage de puissance, dans lequel une valeur du module élastique à la traction suivant A après chauffage est inférieure à une valeur du module élastique à la traction suivant B avant chauffage :
module élastique à la traction A après chauffage : un module élastique à la traction tel que mesuré tel que décrit dans la description dans un environnement à une température de 25 °C, après que le film adhésif pour bornes métalliques est laissé poser dans un environnement de chauffage à une température de 140 °C pendant 12 secondes, puis dans un environnement à une température de 25 °C pendant 1 heure ;
module élastique à la traction B avant chauffage : un module élastique à la traction tel que mesuré tel que décrit dans la description dans un environnement à une température de 25 °C.

2. Film adhésif pour bornes métalliques selon la revendication 1, dans lequel le module élastique à la traction B avant chauffage est de 580 MPa ou plus.

3. Film adhésif pour bornes métalliques selon la revendication 1 ou 2, dans lequel une différence de module élastique à la traction calculée en soustrayant la valeur du module élastique à la traction B avant chauffage de la valeur du module élastique à la traction A après chauffage est de -20 MPa ou moins.

4. Film adhésif pour bornes métalliques selon l'une quelconque des revendications 1 à 3, dans lequel le module élastique à la traction A après chauffage est de 580 MPa ou plus et 700 MPa ou moins.

5. Film adhésif pour bornes métalliques selon l'une quelconque des revendications 1 à 4, dans lequel le film adhésif pour bornes métalliques a une épaisseur de 140 µm ou plus.

6. Film adhésif pour bornes métalliques selon l'une quelconque des revendications 1 à 5, dans lequel le film adhésif pour bornes métalliques est formé d'un stratifié comprenant une première couche de polyoléfine, un matériau de base et une seconde couche de polyoléfine dans cet ordre, dans lequel le matériau de base est formé d'un matériau incluant au moins un composé parmi des polyoléfines, polyamides, polyesters, résines époxy, résines acryliques, fluororésines, résines de silicone, résines de phénol, polyétherimides, polyimides, polycarbonates et des mélanges ou copolymères de ceux-ci.

7. Film adhésif pour bornes métalliques selon la revendication 6, dans lequel une résine contenue dans le matériau de base contient un squelette de polyoléfine.

8. Film adhésif pour bornes métalliques selon la revendication 6 ou 7, dans lequel la première couche de polyoléfine et la seconde couche de polyoléfine contiennent une polyoléfine modifiée par un acide.

9. Film adhésif pour bornes métalliques selon l'une quelconque des revendications 1 à 8, dans lequel le matériau d'emballage de dispositif de stockage de puissance est formé d'un stratifié comprenant au moins une couche de matériau de base, une couche barrière et une couche de résine thermoscellable dans cet ordre, et le film adhésif pour bornes métalliques est interposé entre la couche de résine thermoscellable et la borne métallique,
dans lequel la couche barrière est une couche métallique.

10. Borne métallique avec un film adhésif pour bornes métalliques relié à elle, comprenant le film adhésif pour bornes métalliques selon l'une quelconque des revendications 1 à 9, dans laquelle le film adhésif pour bornes métalliques est relié à une borne métallique.

11. Dispositif de stockage de puissance comprenant l'élément de dispositif de stockage de puissance comprenant au moins une électrode positive, une électrode négative et un électrolyte, le matériau d'emballage de dispositif de stockage de puissance pour sceller l'élément de dispositif de stockage de puissance, et la borne métallique connectée électriquement à chacune de l'électrode positive et l'électrode négative, et faisant saillie en dehors du matériau d'emballage de dispositif de stockage de puissance, dans lequel
le film adhésif pour bornes métalliques selon l'une quelconque des revendications 1 à 9 est interposé entre la borne métallique et le matériau d'emballage de dispositif de stockage de puissance.

12. Procédé de production d'un dispositif de stockage de puissance comprenant l'élément de dispositif de stockage de puissance comprenant au moins une électrode positive, une électrode négative et un électrolyte, le matériau d'emballage de dispositif de stockage de puissance pour sceller l'élément de dispositif de stockage de puissance, et la borne métallique connectée électriquement à chacune de l'électrode positive et l'électrode négative, et faisant saillie en dehors du matériau d'emballage de dispositif de stockage de puissance,
le procédé comprenant l'étape consistant à interposer le film adhésif pour bornes métalliques selon l'une quelconque des revendications 1 à 9 entre la borne métallique et le matériau d'emballage de dispositif de stockage de puissance, et sceller l'élément de dispositif de stockage de puissance avec le matériau d'emballage de dispositif de stockage de puissance.
